# EUROPEAN PATENT APPLICATION

(11) **EP 4 682 117 A1**
(43) Date of publication of application: **21.01.2026**
(21) Application number: 24884321.1
(22) Date of filing: 26.09.2024
(51) Int. Cl.: C02F 7/00

(54) **AERATION DEVICE**

(30) Priority: 01.11.2023 CN 202311452373
(71) Applicant: China Three Gorges Corporation, Wuhan, Hubei 430010 (CN)
(72) Inventor: ZHOU, Yan, Wuhan, Hubei 430010 (CN); CHANG, Manqi, Wuhan, Hubei 430010 (CN); LI, Chong, Wuhan, Hubei 430010 (CN); PENG, Jianfeng, Wuhan, Hubei 430010 (CN); GAO, Yanjin, Wuhan, Hubei 430010 (CN); WANG, Zilin, Wuhan, Hubei 430010 (CN); GAO, Yong, Wuhan, Hubei 430010 (CN); WANG, Jingjing, Wuhan, Hubei 430010 (CN); LI, Wenjing, Wuhan, Hubei 430010 (CN); XIANG, Weibo, Wuhan, Hubei 430010 (CN); MOU, Hailei, Wuhan, Hubei 430010 (CN)
(74) Representative: Bryn Aarflot AS
(86) International application number: PCT/CN2024/121346
(87) International publication number: WO 2025/092315

(57) **Abstract**

Disclosed in the present invention is an aeration device, comprising a carrier, a first buffer member, a second buffer member, a flow guide cylinder and an aeration assembly. The carrier is adapted to be suspended in a water body; the first buffer member is connected to part of the carrier that is submerged in the water body; the first buffer member is provided with a first curved surface portion; the second buffer member is connected to the first buffer member; the second buffer member is provided with a second curved surface portion; the second curved surface portion and the first curved surface portion enclose an arc-shaped flow channel, one end of the arc-shaped flow channel being adapted to be connected to the water body; the flow guide cylinder is provided with a water inlet and a water outlet, the water outlet being communicated with the other end of the arc-shaped flow channel, and the water inlet being adapted to be connected to the water body; the first buffer member, the second buffer member and the flow guide cylinder are all submerged in the water body; the aeration assembly comprises an air supply member and an aeration diffuser, the air supply member being arranged on the carrier, the air supply member being communicated with the aeration diffuser, and the aeration diffuser being arranged inside the flow guide cylinder; and oxygen inside the air supply member passes through the aeration diffuser and then is conveyed into the flow guide cylinder. The present invention reduces the flow velocity loss of upward water flow, and expands the diffusion range of the upward water flow after direction change.

## Description

### CROSS REFERENCE TO RELATED APPLICATIONS

The present application claims the priority of the Chinese patent application with the application number of 202311452373.8, filed with the CNIPA on November. 1, 2023 and entitled "Aeration Device", which is incorporated herein by reference in its entirety.

### TECHNICAL FIELD

The present invention relates to the technical field of water treatment, in particular to an aeration device.

### BACKGROUND

With economic development and social progress, human activities have exerted unprecedented pressure on the aquatic ecology and environment of the surface water bodies such as lakes, reservoirs, and rivers, leading to a series of environmental and ecological crises. The environmental and ecological crises mainly include the shrinkage of water area, deterioration of water quality, frequent occurrence of floods, and reduction or even loss of biodiversity, which seriously threaten sustainable development in affected regions.

For the surface water bodies such as lakes, rivers, and reservoirs, appropriate dissolved oxygen content is a crucial factor in maintaining the stability of material cycling of aquatic ecosystems. The important way for the surface water bodies to replenish the dissolved oxygen content in water is the reaeration process, which is also a necessary condition for the surface water bodies to achieve self-purification. There is an existing aerator including a suspended carrier, a draft tube, an aeration disc, and an air pump; the suspended carrier is a circular hollow container. The upper part of the draft tube is in the shape of inverted circular truncated cone, and the top part of the draft tube is connected to the suspended carrier. The top of the draft tube is provided with several water outlets, and the bottom of the draft tube is provided with a water inlet. The air pump is arranged inside the hollow container of the suspended carrier, the aeration disc is arranged at the bottom of the draft tube and connected to the air pump via an air supply pipe. The air pump releases compressed air into the water body through the aeration disc to form bubbles. During the rising process, the bubbles carry the water flow to move upward along the flow channels inside the draft tube, reaching the top of the draft tube and diffusing around through the water outlets, thereby achieving oxygenation of the water body.

However, in the aforementioned aerator, when the upwelling water flow is transformed into a diffusion flow, the upwelling water flow exerts a relatively large impact force on the suspended carrier, resulting in significant loss in the water flow rate, thereby reducing the diffusion range of the water flow, and further resulting in a limited oxygenation range of the aerator.

### SUMMARY OF THE APPLICATION.

Therefore, technical problems to be solved by the present invention lie in the aerator of the prior art, wherein when the water flow carried by the bubbles rises to the top part of the draft tube, the upwelling water flow exerts a large impact force on the suspended carrier, resulting in significant loss of flow velocity, thereby reducing the diffusion range of the water flow, which limits the oxygenation range of the aerator. In view of this, the present invention provides an aeration device which includes:
a carrier, wherein the carrier is adapted to be suspended in a water body;
a first buffer member, wherein the first buffer member is connected to the carrier, and the first buffer member is provided with a first curved surface portion;
a second buffer member, wherein the second buffer member is connected to the first buffer member, the second buffer member is provided with a second curved surface portion, the second curved surface portion and the first curved surface portion enclose to form an arc-shaped flow channel, and one end of the arc-shaped flow channel is adapted to be in communication with the water body;
a draft tube, wherein the draft tube is provided with water inlets and a water outlet, the water outlet is in communication with the other end of the arc-shaped flow channel, and the water inlets is adapted to be in communication with the water body;
wherein the first buffer member, the second buffer member and the draft tube are all submerged in the water body; and
an aeration assembly, wherein the aeration assembly includes an air supply member and an air inflation member, wherein the air supply member is arranged on the carrier and is in communication with the air inflation member, the air inflation member is arranged in the draft tube, and gas inside the air inflation member is delivered into the draft tube via the air inflation member.

Optionally, in the above-mentioned aeration device, the first buffer member is further provided with a first guide portion, and the second buffer member is provided with a second guide portion, wherein the first guide portion and the second guide portion enclose to form a guide flow channel, the guide flow channel is in communication with one end of the arc-shaped flow channel away from the water outlet, and the other end of the guide flow channel is adapted to be in communication with the water body.

Optionally, in the above-mentioned aeration device, the guide flow channel is oriented parallel to the horizontal plane of the water body.

Optionally, the above-mentioned aeration device further includes a lifting drive member, wherein the lifting drive member is arranged on the first buffer member and connected to the second buffer member, and the lifting drive member is capable of driving the second buffer member to move away from or toward the first buffer member.

Optionally, in the above-mentioned aeration device, the lifting drive member includes:
screws, wherein one end of the screw is fixedly connected to the first buffer member, and the other end of the screw passes through the second buffer member; and
nuts, wherein the nuts are threadedly connected to a part of the screw protruding from the second buffer member;
wherein the nuts are rotated under external force to drive the second buffer member to move toward or away from the first buffer member.

Optionally, in the above-mentioned aeration device, the carrier includes:
a bracket, wherein the bracket is fixedly connected to the first buffer member; and
a float, wherein the float is connected to a side of the bracket opposite to the first buffer member;
wherein the bracket is submerged in the water body.

Optionally, in the above-mentioned aeration device, the aeration assembly further includes an aeration pipe, wherein the air supply member is an aerator, which is connected to a part of the float above the water surface of the water body, and the air inflation member is an aeration disc, one end of the aeration pipe is in communication with the aerator, and the other end of the aeration pipe extends into the draft tube and is in communication with the aeration disc after passing through the float, the bracket, the first buffer member, the second buffer member and the water outlet in sequence.

Optionally, the above-mentioned aeration device further includes a control cabin, wherein the control cabin is located on a side of the float opposite to the bracket, and the control cabin is provided with an accommodating cavity, and the aerator is located within the accommodating cavity.

Optionally, in the above-mentioned aeration device, the control cabin includes:
a first circular ring structure, wherein the first circular ring structure is sleeved around outer periphery of the float, and the first circular ring structure is fixedly connected to the bracket;
a second circular ring structure, wherein the second circular ring structure is connected to the first circular ring structure via a cylindrical member, and an inner diameter of the second circular ring structure is smaller than an inner diameter of the first circular ring structure; and
a hatch cover, wherein the hatch covers on the second circular ring structure;
wherein the float, the first circular ring structure, the cylindrical member and the second circular ring structure enclose to form the accommodating cavity.

Optionally, the above-mentioned aeration device further includes a power supply module, which includes at least one first photovoltaic panel, wherein the first photovoltaic panel is fixedly connected to an outer side wall of the cylindrical member, and the first photovoltaic panel is electrically connected to the air supply member.

Optionally, in the above-mentioned aeration device, the power supply module further includes a second photovoltaic panel, wherein the second photovoltaic panel is fixedly connected to an outer side wall of the hatch cover, and the second photovoltaic panel is electrically connected to the air supply member.

Optionally, in the above-mentioned aeration device, the power supply module further includes a storage battery, and the storage battery is arranged in the accommodating cavity, wherein the storage battery is electrically connected to the first photovoltaic panel, the second photovoltaic panel and the air inflation member, respectively.

Optionally, the above-mentioned aeration device further includes at least one rainproof plate, wherein the rainproof plate is fixedly connected to the outer side wall of the cylindrical member, the rainproof plate and the cylindrical member enclose to form a rainproof chamber, the cylindrical member is provided with at least one ventilation opening, which is arranged within the rainproof chamber, and the rainproof plate is provided with an opening, wherein the opening faces a direction in which rainwater flows on the rainproof plate.

Optionally, the above-mentioned aeration device further includes:
positioning piers, wherein the positioning piers are installed at the bottom of the water body; and
anchor chains, wherein the bracket is provided with least one mooring eye, one end of the anchor chain is connected to the positioning pier, and the other end of the anchor chain is connected to the mooring eye.

Optionally, the above-mentioned aeration device further includes:
a water quality sensor, wherein the water quality sensor is arranged on the air inflation member and
configured for detecting the water quality of the water body;
a flow rate sensor, wherein the flow rate sensor is arranged on an inner wall of the draft tube and configured for detecting the fluid flow rate in the draft tube; and
a controller, wherein the controller is electrically connected to the water quality sensor, the flow rate sensor and the air supply member, respectively, and the controller is in communicatively coupled to an external terminal.

The technical solutions provided by the present invention have the following advantages:
1. The aeration device provided by the present invention includes a carrier, a first buffer member, a second buffer member, a draft tube and an aeration assembly, wherein the carrier is adapted to be suspended in a water body, and the first buffer member is connected to the carrier; the first buffer member is provided with a first curved surface portion, the second buffer member is connected to the first buffer member, and the second buffer member is provided with a second curved surface portion; the second curved surface portion and the first curved surface portion enclose to form an arc-shaped flow channel, and one end of the arc-shaped flow channel is adapted to be in communication with the water body; the draft tube is provided with water inlets and a water outlet, the water outlet is in communication with the other end of the arc-shaped flow channel, and the water inlets are in communication with the water body; the first buffer member, the second buffer member and the draft tube are all submerged in the water body; the aeration assembly includes an air supply member and an air inflation member, wherein the air supply member is arranged on the carrier and is in communication with the air inflation member, the air inflation member is arranged in the draft tube, and gas from the air supply member is released into the draft tube via the air inflation member. After the air supply member conveys gas to the draft tube via the air inflation member, bubbles will be generated, and the bubbles will rise due to the buoyancy of the water body, meanwhile, the oxygen inside the bubbles dissolves into the water body through bubble interfaces. During the rising process, the bubbles drive the oxygenated water flow upward through the water inlets of the draft tube, under the guidance of the draft tube, the water flow is then discharged into the arc-shaped flow channel through the water outlet of the draft tube. Since the arc-shaped flow channel is arc-shaped, it may act as a buffer for the upwelling water flow, enabling the upwelling water flow to smoothly transform into a diffused flow, and reducing the loss of flow velocity in the upwelling water flow, thereby enhancing the diffusion range of the upwelling water flow after directional change, and expanding the oxygenation range of the aeration device.

### BRIEF DESCRIPTION OF THE DRAWINGS

In order to more clearly explain technical solutions in specific embodiments of the present invention or in the prior art, the accompanying drawings that need to be used in the description of the specific embodiments or the prior art will be briefly introduced below. Apparently, the accompanying drawings described below represent some embodiments of the present application. For those ordinarily skilled in the art, other drawings may also be obtained based on these accompanying drawings without expenditure of creative efforts.
FIG. 1 is a structural schematic view of the aeration device provided by the present invention;
FIG. 2 is a cut-away view of the aeration device provided by the present invention;
FIG. 3 is a schematic view of the second buffer member, the bracket, the float, the rainproof plate and the first photovoltaic panel in the aeration device provided by the present invention;
FIG. 4 is a top view of the aeration device provided by the present invention without a rainproof plate;
FIG. 5 is a schematic view of the draft tube, the first buffer member, the second buffer member and the aeration pipe in the aeration device provided by the present invention.

### Reference numerals:

1. carrier; 11. bracket; 111. mooring eye; 12. float;
2. first buffer member; 21. first curved surface portion; 22. first guide portion;
3. second buffer member; 31. second curved surface portion; 32. second guide portion;
4. draft tube; 41. water inlet;
51. air supply member; 52. air inflation member; 53. aeration pipe;
6. lifting drive member; 61. screw; 62. nut;
71. first circular ring structure; 72. second circular ring structure; 73. cylindrical member; 731. ventilation opening; 74. hatch cover; 75. accommodating cavity;
81. first photovoltaic panel; 82. second photovoltaic panel; 83. storage battery;
91. rainproof plate; 911. opening; 92. positioning pier; 93. anchor chain; 94. controller.

### DETAILED DESCRIPTION

Technical solutions of the present invention will be clearly and completely described below in conjunction with the accompanying drawings. It is to be understood that the described embodiments represent a part of the embodiments of the present invention, not all of them. Based on the embodiments described in the present invention, all other embodiments obtainable by those ordinarily skilled in the art without expenditure of creative labor fall within the scope of protection of the present invention. In the description of the present invention, it is noted that the orientation or positional relationships indicated by the terms "center", "upper", "lower", "left", "right", "vertical", "horizontal", "inner", "outer", and the like are orientation or position relations illustrated based on the accompanying drawings, and are merely for the convenience of describing the present invention and simplifying the description, and are not intended to indicate or imply the denoted device or element must have a specific orientation or must be constructed and operated in a specific orientation. Therefore, such terms should not be construed as limiting the present invention. Furthermore, the terms "first", "second" and "third" are used for descriptive purposes only and should not be understood as indicating or implying relative importance.

In the description of the present invention, it should be noted that, unless otherwise clearly specified and defined, the terms "installed", "coupled" and "connected" should be understood in a broad sense, for example, it may indicate fixed connection, or detachable connection, or integral connection; it may indicate mechanical connection, or electrical connection; it may indicate direct connection, or indirect connection through an intermediate medium, or internal communication between two components. For a person with ordinary skill in the art, specific meanings of the above-mentioned terms in the present invention may be construed according to specific circumstances thereof.

Furthermore, technical features from the different embodiments described below may be combined with each other, provided that such combinations are not mutually contradictory.

### Embodiment 1

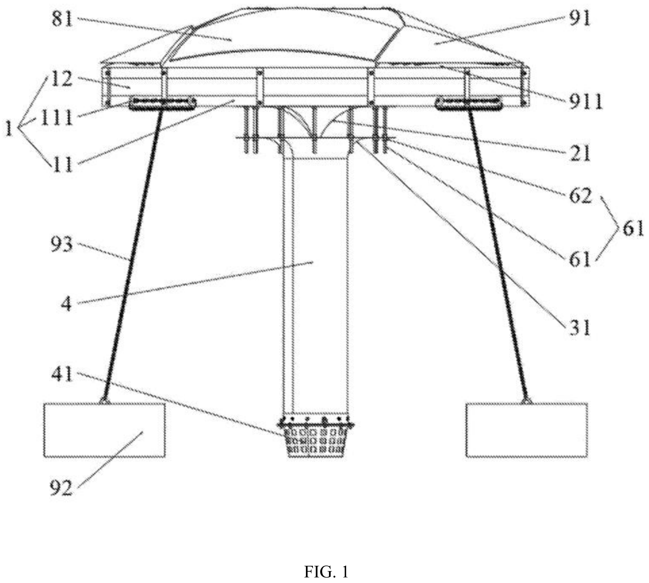

As shown in FIGS. 1 to 5, the present embodiment provides an aeration device, which includes a carrier 1, a first buffer member 2, a second buffer member 3, a draft tube 4 and an aeration assembly. The carrier 1 is adapted to be suspended in a water body, and the first buffer member 2 is connected to the carrier 1. The first buffer member 2 is provided with a first curved surface portion 21, and the second buffer member 3 is connected to the first buffer member 2. The second buffer member 3 is provided with a second curved surface portion 31, and the second curved surface portion 31 and the first curved surface portion 21 enclose to form an arc-shaped flow channel. One end of the arc-shaped flow channel is adapted to be in communication with the water body. The draft tube 4 is provided with water inlets 41 and a water outlet, the water outlet is in communication with the other end of the arc-shaped flow channel, and the water inlets 41 are in communication with the water body. The first buffer member 2, the second buffer member 3 and the draft tube 4 are all submerged in the water body. The aeration assembly includes an air supply member 51 and an air inflation member 52, the air supply member 51 is arranged on the carrier 1 and is in communication with the air inflation member 52, and the air inflation member 52 is arranged inside the draft tube 4. The gas inside the air supply member 51 is released into the draft tube 4 via the air inflation member 52.

In the aeration device provided by the present embodiment, after the air supply member conveys gas to the draft tube 4 via the air inflation member, bubbles will be generated, and the bubbles will rise due to the buoyancy of the water body, meanwhile, oxygen in the bubbles dissolves into the water body through the bubble interfaces. During the rising process, the bubbles drive the oxygenated water flow to flow upward through the water inlets 41 of the draft tube 4. Under the guidance of the draft tube 4, the water flow is discharged into the arc-shaped flow channel through the water outlet of the draft tube 4. Since the flow channel is arc-shaped, it may act as a buffer for the upwelling water flow, enabling the upwelling water flow to smoothly transform into a diffused flow, and reducing the loss of flow velocity in the upwelling water flow, thereby enhancing the diffusion range of the upwelling water flow after directional change, and further expanding the oxygenation range of the aeration device.

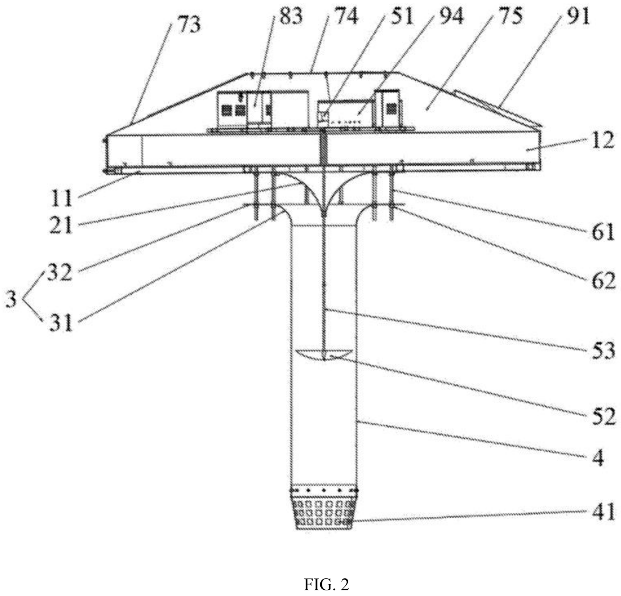

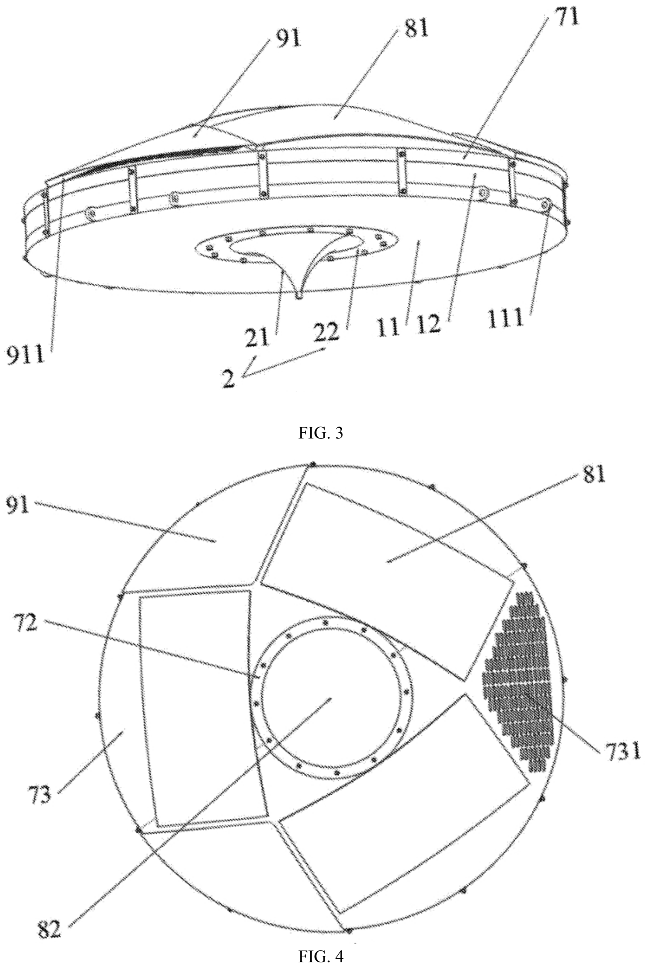

As shown in FIGS. 2, 3 and 5, in the aeration device provided by the present embodiment, the carrier 1 is disc-shaped. The first curved surface portion 21 is a curved surface formed by rotating a first arc line around an axis of the carrier 1 for a full circle. Taking the perspective in FIG. 3 as an example, the first arc line is a concave arc, and a diameter of an upper end of the first curved surface portion 21 is larger than that of its lower end, with the diameter of the first curved surface portion 21 gradually decreasing from the upper end to the lower end. The second curved surface portion 31 is a curved surface formed by rotating a second arc line around the axis of the carrier 1 for a full circle. Both the first arc line and the second arc line are quarter-circular arcs, the first arc line and the second arc line are concentric, and the radius of the first arc line is larger than that of the second arc line. Taking the perspective in FIG. 2 as an example, the second arc line is concave arc, and a diameter of an upper end of the second curved surface portion 31 is larger than that of its lower end, with the diameter of the second curved surface portion 31 gradually decreasing from the upper end to the lower end. The diameter of the upper end of the first curved surface portion 21 is equal to the diameter of the upper end of the second curved surface portion 31, and the diameter of the lower end of the first curved surface portion 21 is smaller than the diameter of the lower end of the second curved surface 31. The lower end of the first curved surface portion 21 extends into the second curved surface portion 31. As an alternative implementing way, in the art, the distance between the first curved surface portion 21 and the second curved surface portion 31, the diameters of the upper end and the lower end of the first curved surface portion 21, and the diameters of the upper end and the lower end of the second curved surface portion 31 may be adjusted based on the actual installation conditions. The channel enclosed between the first curved surface portion 21 and the second curved surface portion 31 is an arc-shaped flow channel, which is ring-shaped. The draft tube 4 includes a cylinder body and a water inlet sleeve. The cross-section of the cylinder body may be square, rectangular, or other common shapes, in the present embodiment, the cross-section of the cylinder body is circular. The diameter of the lower end of the second curved surface portion 31 is equal to a diameter of the cylinder body, and the lower end of the second curved surface portion 31 is integrally formed with the upper end of the cylinder body. The cylinder body may be composed of multiple curved cylinder segments, and the cylinder body may also be arc-shaped, in the present embodiment, the cylinder body is straight and vertically arranged in the water body. As an alternative implementing way, the cylinder body may be arranged according to actual construction conditions, and an opening at the upper end of the cylinder body serves as the water outlet. The water inlet sleeve is adapted to the cylinder body, in the present embodiment, the water inlet sleeve is in the shape of an inverted circular truncated cone. The water inlet sleeve is sleeved around outer periphery of the cylinder body and is in communication with the opening at the lower end of the cylinder body. The water inlet sleeve is fixedly connected to a side wall of the cylinder body through bolts, and several water inlets 41 are evenly distributed at intervals on the peripheral side wall of the water inlet sleeve. As an alternative implementing way, those skilled in the art may adjust the distribution of the water inlets 41 as needed; the water inlet 41 may be a round hole, a square hole or holes of other common shapes; the water inlets 41 are provided on the peripheral side wall of the water inlet sleeve, so as to avoid opening holes at the bottom of the water inlet sleeve, thereby avoiding disturbance to the sediment, which is caused by direct water absorption at the bottom of the water inlet sleeve. The water inlet sleeve is in the shape of an inverted circular truncated cone, which may avoid aquatic plants entering the cylinder body and entangling the air inflation member 52, meanwhile, since a diameter of the upper end of the water inlet sleeve is larger than that of the lower end thereof, substances entangled on the water inlet sleeve may naturally settle under gravity to prevent the water inlets 41 from being blocked. An inner wall of the draft tube 4 is coated with a hydrophobic coating, which may reduce the friction resistance between the upwelling water flow and the inner wall of the draft tube 4, thereby reducing velocity loss of the water flow within the draft tube 4.

As shown in FIGS. 2, 3 and 5, in the aeration device provided by the present embodiment, the first buffer member 2 is further provided with a first guide portion 22, which is a circular ring-shaped plate. An inner diameter of the first guide portion 22 is equal to the diameter of the upper end of the first curved surface portion 21, and the inner peripheral edge of the first guide portion 22 is connected to the upper end of the first curved surface portion 21 and smoothly transitions with it. The connection mode may be welding, bonding, or other common fixed connection modes. In the present embodiment, the first guide portion 22 and the first curved surface portion 21 are integrally formed. The first guide portion 22 is fixedly connected to the bottom of the carrier 1 through bolts, and the second buffer member 3 is further provided with a second guide portion 32, which is a circular ring-shaped plate. The inner diameter, outer diameter, and thickness of the second guide portion 32 are identical to those of the first guide portion 22. As an alternative implementing way, the inner diameter, outer diameter, and thickness of the first guide portion 22 and the second guide portion 32 may be adjusted as needed. The inner diameter of the second guide portion 32 is equal to the diameter of the upper end of the second curved surface portion 31, and the inner circumference of the second guide portion 32 is connected to the upper end of the second curved surface portion 31 and smoothly transitions with it. In the present embodiment, the second guide portion 32 and the second curved surface portion 31 are integrally formed, both the first curved surface portion 21 and the second curved surface portion 31 are made of thin-walled materials, additionally, hydrophobic coatings may be applied to the two opposite side walls of the first curved surface portion 21 and the second curved surface portion 31, as well as to the two opposite side walls of the first guide portion 22 and the second guide portion 32, to reduce the friction resistance between the water flow and the side walls, thereby slowing down the rate of water flow loss. The channel enclosed between the first guide portion 22 and the second guide portion 32 is a guide flow channel, which is ring-shaped. An inlet of the arc-shaped flow channel is in communication with the water outlet, and an outlet of the arc-shaped flow channel is in communication with an inlet of the guide flow channel. An outlet of the guide flow channel is in communication with the water body. Through the coordination of the arc-shaped flow channel and the guide flow channel, the upwelling water flow may be smoothly transformed into a diffused flow, and the flow velocity loss of the water flow may be reduced.

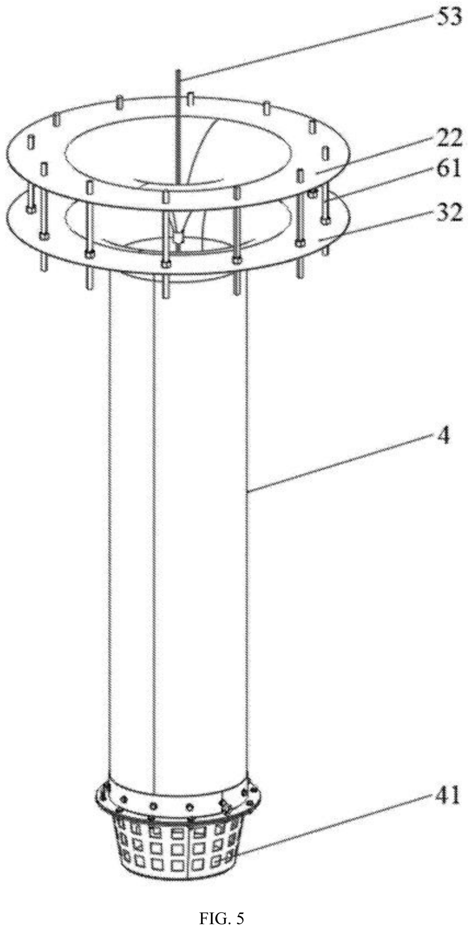

As shown in FIGS. 3 and 5, in the aeration device provided by the present embodiment, the guide flow channel is parallel to the horizontal plane of the water body, so that the upwelling water flow may be transformed into a horizontal flow, which may expand the radiation area of the water flow and increase the influence range of the aeration device. As an alternative embodiment, the guide flow channel may also be an arc-shaped flow channel.

As shown in FIG. 5, the aeration device provided by the present embodiment further includes a lifting drive member 6, which is arranged on the first guide portion 22 and is connected to the second guide portion 32, the lifting drive member 6 is capable of driving the second buffer member 3 to move toward or away from the first buffer member 2. The lifting drive member 6 may be a hydraulic cylinder, a lead screw structure, a scissor linkages and other lifting mechanisms.

As shown in FIG. 5, the aeration device provided by the present embodiment in practical application, the lifting drive member 6 includes screws 61 and nuts 62. The top end of the screw 61 is fixedly connected to the bottom surface of the first guide portion 22, the connection mode may be welding, threaded connection, or other common fixed connection modes. The other end of the screw 61 passes through the second guide portion 32. The nuts 62 includes an upper nut and a lower nut, both of which are threadedly connected to screw 61, and the upper nut and the lower nut are located on an upper side and a lower side of the second guide portion 32, respectively. By adjusting the positions of the upper nut and the lower nut on the screw 61, the distance between the first guide portion 22 and the second guide portion 32 is changed, and at the same time, the distance between the first curved surface portion 21 and the second surface portion 31 is changed. The lifting drive member 6 may drive the second buffer member 3 to approach or move away from the first buffer member 2, so as to adapt to the flow induction capacity of different air inflation members 52, and the flow induction capacity is an ability of the air inflation member 52 to release oxygen and generate bubbles to draw water upwardly, thereby achieving the optimal flow rate in the guide flow channel.

In another alternative embodiment, multiple lifting drive members 6 may be arranged, which are evenly distributed at intervals along the first circumference between the first guide portion 22 and the second guide portion 32, with the center of the first circumference located on the axis of the carrier 1.

As shown in FIGS. 1 to 3, in the aeration device provided by the present embodiment, the carrier 1 includes a bracket 11 and a float 12. The cross-section of the bracket 11 may be square, rectangular, circular, or other common shapes. In the present embodiment, the cross-section of the bracket 11 is circular and the bracket 11 is in the shape of a disc. The first guide portion 22 is connected to the bottom of the bracket 11 through bolts, and the upper surface of the bracket 11 is provided with a circular groove. The float 12 is adapted to the bracket 11, the float 12 is cylindrical and is inserted into the circular groove, with a part of the float 12 extending outside the circular groove. The bracket 11 is submerged in the water body, and at least the part of the float 12 remains above the water surface all the time.

As shown in FIG. 2, in the aeration device provided by the present embodiment, the aeration assembly further includes an aeration pipe 53. The air supply member 51 is a low-power aerator. As an alternative implementation way, the air supply member 51 may also be an air pump, air compressor, or other common air extraction equipment or air supply equipment. The aerator is installed on an upper surface of the float 12, one end of the aeration pipe 53 is in communication with the aerator, and the other end of the aeration pipe 53 extends into the draft tube 4 and is in communication with the air inflation member 52 after passing through the float 12, the bracket 11, the first buffer member 2, the second buffer member 3 and the water outlet in sequence, the air inflation member 52 is a microporous aeration disc; the aerator conveys the extracted air to the aeration disc via the aeration pipe 53, and then the aeration disc discharges tiny bubbles. By utilizing the hydrodynamic force generated by the bubble flotation, an upwelling water flow is formed in the draft tube 4. In the aeration device provided in the present embodiment, all moving components are located above the water surface of the water body, which reduces the oxidation, wear and blockage of the moving parts and improves the durability of the aeration device.

As shown in FIGS. 1 to 4, the aeration device provided by the present embodiment further includes a control cabin. The control cabin is located on a side of the float 12 opposite to the bracket 11, and has an accommodating cavity 75. The aerator is located within the accommodating cavity 75, and the control cabin is used to protect the stored items located in the accommodating cavity 75.

As shown in FIGS. 1 to 4, in the aeration device provided by the present embodiment, the control cabin is in the shape of circular truncated cone. The control cabin includes a first circular ring structure 71, a second circular ring structure 72 and a hatch cover 74. The first circular ring structure 71 is sleeved around outer periphery of part of the float 12, and several strip-shaped plates are evenly distributed at intervals around the outer periphery of the float 12. Two ends of any strip-shaped plate are fixedly connected to the first circular ring structure 71 and the bracket 11 through bolts, respectively, so as to achieve the fixation of the first circular ring structure 71 and the bracket 11 together. The second circular ring structure 72 is connected to the first circular ring structure 71 via a cylindrical member 73, and an inner diameter of the second circular ring structure 72 is smaller than that of the first circular ring structure 71. An inner diameter of the cylindrical member 73 decreases from the first circular ring structure 71 to the second circular ring structure 72. The hatch cover 74 is hinged to the second circular ring structure 72 and may cover on the opening of the second circular ring structure 72. The float 12, the first circular ring structure 71, the cylindrical member 73, and the second circular ring structure 72 enclose to form the accommodating cavity 75. Maintenance personnel may enter the accommodating cavity by opening the hatch cover, which is convenient for later maintenance.

As shown in FIGS. 1, 3 and 4, the aeration device provided by the present embodiment further includes a power supply module, which includes at least one first photovoltaic panel 81, the number of photovoltaic panels is not limited in the present embodiment; three first photovoltaic panels 81 are evenly distributed at intervals on the outer side walls of the cylindrical member 73. Each first photovoltaic panel 81 is a flexible photovoltaic panel, and each first photovoltaic panel is attached to the outer side wall of the cylindrical member 73. The three first photovoltaic panels 81 are evenly distributed at intervals around the axis of the carrier 1 in a circumferential manner, which ensures that at least one first photovoltaic panel 81 receives sunlight, thereby reducing the influence of the angle between the aeration device and sunlight on the first photovoltaic panel 81. Additionally, the elevation angle of the cylindrical member 73 may be adjusted according to different regions to improve the working efficiency of the first photovoltaic panels 81.

As shown in FIGS. 1, 3 and 4, in the aeration device provided by the present embodiment, the power supply module further includes a second photovoltaic panel 82, which is attached to the outer side wall of the hatch cover 74. By adding the second photovoltaic panel 82, the effective area covered by the photovoltaic panels is increased, and the second photovoltaic panel 82 is parallel to the horizontal plane.

As shown in FIG. 2, in the aeration device provided by the present embodiment, the power supply module further includes a storage battery 83 and an inverter. The storage battery 83 is arranged in the accommodating cavity 75, that is, the storage battery 83 is placed on the upper surface of the float 12, and the storage battery 83 is connected to the first photovoltaic panel 81, the second photovoltaic panel 82 and the inverter via cables, respectively. The inverter is connected to the aerator via another cable. The excess electricity generated by the first photovoltaic panel 81 and the second photovoltaic panel 82 during the day is stored in the storage battery 83, and the storage battery 83 is used to supply power to the aerator at night. The first photovoltaic panel 81 and the second photovoltaic panel 82 are also connected to the inverter via cables, respectively, that is, the first photovoltaic panel 81 and the second photovoltaic panel 82 may directly supply power to the aerator.

As shown in FIGS. 1 to 4, the aeration device provided by the present embodiment further includes three rainproof plates 91, the number of rainproof plates is not limited in the present embodiment. The rainproof plates 91 are fan-shaped plates, which are welded and fixed to the outer side wall of the cylindrical member 73. A rainproof plate 91 is arranged between any two adjacent first photovoltaic panels 81, and the rainproof plates 91 and the outer side wall of the cylindrical member 73 enclose to form a rainproof cavity. A number of ventilation openings 731 are provided on the outer side walls of the cylindrical member 73 located inside the rainproof cavity, and the ventilation openings 731 are used for ventilation and heat dissipation in the control cabin. The rainproof plates 91 are used to prevent rainwater from entering the accommodating cavity 75 of the control cabin. The rainproof plate 91 is provided with an opening 911, wherein the opening 911 faces the direction in which rainwater flows on the rainproof plate 91which. The external air may enter the accommodating cavity 75 through the opening 911 and the ventilation opening 731 in sequence.

As shown in FIG. 1, the aeration device provided by the present embodiment further includes positioning piers 92 and mooring eyes 111 and anchor chains 93. The positioning piers 92 are pile foundations installed at the bottom of the water body. The number of positioning piers is not limited in the present embodiment, and those skilled in the art may set multiple positioning piers 92 as well as the matching anchor chains 93 and mooring eyes 111 as needed. The bracket 11 is arranged with mooring eyes 111, which protrudes out of the bracket 11. One end of the anchor chain 93 is shackled to a mooring eye 111, and the other end is connected to a positioning pier 92, so as to fix the carrier 1 within a certain water area.

The aeration device provided by the present embodiment further includes a water quality sensor, a flow rate sensor, and a controller 94 and a signal transmitting member. The water quality sensor is arranged at the bottom of the air inflation member 52 and used to monitor and provide feedback on the water quality of the water body. The flow rate sensor is arranged at the bottom of the air inflation member 52 and used for detecting the water flow rate in the draft tube 4 to reflect whether the water inlet 41 of the draft tube 4 is blocked. The controller 94 is a single-chip microcomputer or Raspberry PI, and the controller 94 is placed inside the cabin of the control cabin. The controller 94 is connected to the aerator via cables and may control the power of the aerator. The water quality sensor and the flow rate sensor are electrically connected to the controller 94 via interface communication components or cables, respectively. The signal transmitting member is connected to the controller 94 via cables or communication structure components and used for communication with external terminals, which may be mobile phones or computers, thereby achieving remote monitoring and regulation. The communication interface component supports multiple communication protocols, including but not limited to Modbus, PROFIBUS and OPC, etc. When the water quality sensor indicates an improvement in water quality, the controller 94 may reduce the power of the aerator and decrease power consumption. When the flow rate sensor indicates a decrease in the water flow rate, the controller 94 sends an alarm signal to the terminal via the signal transmitting member.

In the aeration device provided by the present embodiment, bubbles generated by the aeration disc carry oxygenated water flow upward, achieving exchange between the shallow and deep layers of the water body to enhance the dissolved oxygen content of the water body, suppress the release of pollutants from sediment, enhance the transmission efficiency of the food web, disrupt the competitive advantage of blue-green algae, and alleviate the risk of algal blooms.

The aeration device provided in the present embodiment works as follows:
Firstly, the air supply member 51 starts to work. The air supply member 51 draws air inside the accommodating cavity 75 of the control cabin to generate compressed air, and then the compressed air is conveyed into the air inflation member 52 via the aeration pipe 53. Due to the pressure difference between the accommodating cavity 75 and the external environment, the external air is conveyed into the accommodating chamber 75 after passing through the opening 911 and the ventilation opening 731 in sequence. As the air supply member 51 continuously conveys compressed air to the air inflation member, the compressed air in the air inflation member 52 is conveyed through microholes on it into the water body inside the draft tube 4, forming bubbles. The bubbles rise due to the buoyancy of the water body, and the oxygen inside the bubbles dissolves into the water body through the bubble interfaces. During the rising process, the bubbles drive the oxygenated water body to flow upward, thereby enabling the water outside the draft tube 4 to be conveyed into it through the water inlet 41. Under the guidance of the draft tube 4, the upwelling water flow is discharged into the arc-shaped flow channel through the water outlet, and then is conveyed into the guide flow channel via the arc-shaped flow channel. Under the guidance of the arc-shaped flow channel, the upwelling water flow is transformed into a horizontal flow. The guide flow channel plays a transitional role to enable the horizontal flow to have a broader radiation area. The horizontal flow within the guide flow channel is then re-conveyed back into the water body, thereby achieving the circulation between deep water and shallow water, and during this circulation process, the dissolved content of the water body is enhanced.

Apparently, the above embodiments are merely examples for clear illustration, and not intended to limit to the implementing ways. For a person with ordinary skill in the art, various changes or modifications in different forms may also be made based on the above description. It is neither necessary nor possible to exhaustively enumerate all the embodiments herein. Any obvious changes or modifications that may arise from this are still within the scope of protection of the present invention.

## Claims

1. An aeration device, **characterized in that** the aeration device comprises:
a carrier (1), wherein the carrier (1) is adapted to be suspended in a water body;
a first buffer member (2), wherein the first buffer member (2) is connected to the carrier (1), and the first buffer member (2) is provided with a first curved surface portion (21);
a second buffer member (3), wherein the second buffer member (3) is connected to the first buffer member (2), the second buffer member (3) is provided with a second curved surface portion (31), the second curved surface portion (31) and the first curved surface portion (21) enclose to form an arc-shaped flow channel, and one end of the arc-shaped flow channel is adapted to be in communication with the water body;
a draft tube (4), wherein the draft tube (4) is provided with water inlets (41) and a water outlet, the water outlet is in communication with the other end of the arc-shaped flow channel, and the water inlets (41) are adapted to be in communication with the water body;
wherein the first buffer member (2), the second buffer member (3) and the draft tube (4) are all submerged in the water body; and
an aeration assembly, wherein the aeration assembly comprises an air supply member (51) and an air inflation member (52), wherein the air supply member (51) is arranged on the carrier (1) and is in communication with the air inflation member (52), the air inflation member (52) is arranged in the draft tube (4), and gas inside the air supply member (51) is delivered into the draft tube (4) via the air inflation member (52).

2. The aeration device according to claim 1, **characterized in that** the first buffer member (2) is further provided with a first guide portion (22), and the second buffer member (3) is provided with a second guide portion (32), wherein the first guide portion (22) and the second guide portion (32) enclose to form a guide flow channel, the guide flow channel is in communication with one end of the arc-shaped flow channel away from the water outlet, and the other end of the guide flow channel is adapted to be in communication with the water body.

3. The aeration device according to claim 2, **characterized in that** the guide flow channel is parallel to the horizontal plane of the water body.

4. The aeration device according to any one of claims 1 to 3, **characterized in that** the aeration device further comprises a lifting drive member (6), wherein the lifting drive member (6) is arranged on the first buffer member (2) and connected to the second buffer member (3), and the lifting drive member (6) is capable of driving the second buffer member (3) to move away from or toward the first buffer member (2).

5. The aeration device according to claim 4, **characterized in that** the lifting drive member (6) comprises:
screws (61), wherein one end of the screw (61) is fixedly connected to the first buffer member (2), and the other end of the screw (61) passes through the second buffer member (3); and
nuts (62), wherein the nuts (62) are threadedly connected to a part of the screw (61) protruding from the second buffer member (3);
wherein the nuts (62) are rotated under external force to drive the second buffer member (3) to move toward or away from the first buffer member (2).

6. The aeration device according to claim 1 or 5, **characterized in that** the carrier (1) comprises:
a bracket (11), wherein the bracket (11) is fixedly connected to the first buffer member (2); and
a float (12), wherein the float (12) is connected to a side of the bracket (11) opposite to the first buffer member (2);
wherein the bracket (11) is disposed below the water surface.

7. The aeration device according to claim 6, **characterized in that** the aeration assembly further comprises an aeration pipe (53), wherein the air supply member (51) is an aerator, which is connected to a part of the float (12) above the water surface of the water body, and the air inflation member (52) is an aeration disc, one end of the aeration pipe (53) is in communication with the aerator, and the other end of the aeration pipe (53) extends into the draft tube (4) and is in communication with the aeration disc after passing through the float (12), the bracket (11), the first buffer member (2), the second buffer member (3) and the water outlet in sequence.

8. The aeration device according to claim 7, **characterized in that** the aeration device further comprises a control cabin, wherein the control cabin is located on the float (12) on a side opposite to the bracket (11), and the control cabin is provided with an accommodating cavity (75), and the aerator is located within the accommodating cavity (75).

9. The aeration device according to claim 8, **characterized in that** the control cabin comprises:
a first circular ring structure (71), wherein the first circular ring structure (71) is sleeved around outer periphery of the float (12), and the first circular ring structure (71) is fixedly connected to the bracket (11);
a second circular ring structure (72), wherein the second circular ring structure (72) is connected to the first circular ring structure (71) via a cylindrical member (73), and an inner diameter of the second circular ring structure (72) is smaller than an inner diameter of the first circular ring structure (71); and
a hatch cover (74), wherein the hatch cover (74) covers on the second circular ring structure (72);
wherein the float (12), the first circular ring structure (71), the cylindrical member (73) and the second circular ring structure (72) enclose to form the accommodating cavity (75).

10. The aeration device according to claim 9, **characterized in that** the aeration device further comprises a power supply module, which comprises at least one first photovoltaic panel (81), wherein the first photovoltaic panel (81) is fixedly connected to an outer side wall of the cylindrical member (73), and the first photovoltaic panel (81) is electrically connected to the air supply member (51).

11. The aeration device according to claim 10, **characterized in that** the power supply module further comprises a second photovoltaic panel (82), wherein the second photovoltaic panel (82) is fixedly connected to an outer side wall of the hatch cover (74), and the second photovoltaic panel (82) is electrically connected to the air supply member (51).

12. The aeration device according to claim 11, **characterized in that** the power supply module further comprises a storage battery (83), and the storage battery (83) is arranged in the accommodating cavity (75), wherein the storage battery (83) is electrically connected to the first photovoltaic panel (81), the second photovoltaic panel (82) and the air supply member (51), respectively.

13. The aeration device according to any one of claims 9 to 12, **characterized in that** the aeration device further comprises at least one rainproof plate (91), wherein the rainproof plate (91) is fixedly connected to the outer side wall of the cylindrical member (73), the rainproof plate (91) and the cylindrical member (73) enclose to form a rainproof cavity, the cylindrical member (73) is provided with at least one ventilation opening (731), which is arranged within the rainproof cavity, and the rainproof plate (91) is provided with an opening (911),wherein the opening (911) faces a direction in which rainwater flows on the rainproof plate (91).

14. The aeration device according to claim 13, **characterized in that** the aeration device further comprises:
positioning piers (92), wherein the positioning piers (92) are installed at the bottom of the water body; and
anchor chains (93), wherein the bracket (11) is provided with at least one mooring eye (111), one end of the anchor chain (93) is connected to the positioning pier (92), and the other end of the anchor chain (93) is connected to the mooring eye (111).

15. The aeration device according to any one of claim 1 or 14, **characterized in that** the aeration device further comprises:
a water quality sensor, wherein the water quality sensor is arranged on the air inflation member (52) and configured for detecting the water quality of the water body;
a flow rate sensor, wherein the flow rate sensor is arranged on the air inflation member (52) and configured for detecting the fluid flow rate in the draft tube (4); and
a controller (94), wherein the controller (94) is electrically connected to the water quality sensor, the flow rate sensor and the air supply member (51), respectively, and the controller (94) is communicatively coupled to an external terminal.
